# NEUE EUROPÄISCHE PATENTSCHRIFT

(11) **EP 1 584 810 B2**
(45) Veröffentlichungstag und Bekanntmachung des Hinweises auf die Entscheidung über den Einspruch: **09.06.2021**
(45) Hinweis auf die Patenterteilung: 23.01.2013
(21) Anmeldenummer: 05005195.2
(22) Anmeldetag: 10.03.2005
(51) Int. Cl.: F02F 7/00, F16C 9/02

(54) **Maschinengehäuse für eine Brennkraftmaschine**
Crankcase for combustion engine
Bloc moteur pour moteur à combustion

(30) Priorität: 10.04.2004 DE 102004017738
(43) Veröffentlichungstag der Anmeldung: 12.10.2005
(73) Patentinhaber: Bayerische Motoren Werke Aktiengesellschaft, 80809 München (DE)
(72) Erfinder: Hiemesch, Christian, A-4400 St. Ulrich B. Steyr (AT); Stastny, Johann, 4400 Steyr (AT)

(56) Entgegenhaltungen:
- DE-A1- 3 444 838
- DE-C1- 4 334 444
- FR-A- 1 246 506
- JP-U- 59 000 553

## Beschreibung

Die Erfindung betrifft ein Maschinengehäuse für eine Brennkraftmaschine mit den Merkmalen aus dem Oberbegriff des Patentanspruchs 1.

Sie geht von der deutschen Patentschrift DE 34 44 838 C2 aus. In dieser ist ein Zylinderkurbelgehäuse für eine Brennkraftmaschine mit Zylindern in V-Anordnung beschrieben. Geodätisch unter den Zylindern befindet sich ein Kurbelwellenlager, welches in einen Lagerstuhl und einen Lagerdeckel aufgeteilt ist. Der Lagerstuhl ist einstückig mit dem Kurbelgehäuse ausgebildet. Der korrespondierende Lagerdeckel ist mit zwei Schraubverbindungen auf den Lagerstuhl aufgeschraubt. Um dem Kurbelgehäuse eine optimale Steifigkeit zu verleihen, überspannt ein Versteifungselement das geteilte Kurbelwellenlager von der einen Kurbelgehäusewand zu der anderen Kurbelgehäusewand. Dieses Versteifungselement ist beidseitig mit der jeweiligen Kurbelgehäusewand verschraubt. Um der gesamten Anordnung, das heißt dem Kurbelgehäuse samt dem Kurbelwellenlager, eine optimale Steifigkeit zu verleihen, weist das Versteifungselement ferner einen Auflager auf, der auf dem Lagerdeckel aufliegt und mit diesem verschraubt ist.

Da die Kurbelgehäusewände Ölkammern aufweisen, die von dem Versteifungselement abgedeckt und überspannt werden, ist es durch fertigungstechnische Unzulänglichkeiten möglich, dass die Auflageflächen des Versteifungselementes im Bereich der Ölkammern nicht ganz plan sind. Hierdurch kann es passieren, dass nach dem Befestigen des Versteifungselementes an den Kurbelgehäusewänden Spannungen im Versteifungselement auftreten, die, nach der Befestigung am Lagerdeckel, im Kurbelwellenlager zu Deformationen führen können. Diese können sich wiederum negativ auf die Lebensdauer des Kurbelwellenlagers auswirken.

Ferner ist aus der deutschen Patentschrift DE 195 24 070 C1 bekannt, gattungsgemäße Versteifungselemente an sämtlichen äußeren Befestigungspunkten am Maschinengehäuse mit toleranzausgleichenden Spielausgleichselementen zu versehen.

Aufgabe der vorliegenden Erfindung ist es, eine Möglichkeit für eine einfache und verspannungsfreie Montage des Versteifungselementes aufzuzeigen, wobei eine Deformationen in dem Kurbelwellenlager verhindert ist.

Diese Aufgabe wird durch das Merkmal im kennzeichnenden Teil des Patentanspruchs 1 gelöst.

Durch die erfindungsgemäße Ausgestaltung ist es praktisch ausgeschlossen, dass Spannungen in dem Versteifungselement durch die Montage am Lagerdeckel auf das geteilte Lager übertragen werden. Ferner wird in vorteilhafter Weise die Anzahl von benötigten Ausgleichselementen auf ein Minimum reduziert. Hierdurch wird die Montage des Versteifungselementes vereinfacht und die Herstellkosten für das Maschinengehäuse reduziert. Es kann je nach Einbausituation in vorteilhafter Weise das Abstützelement entweder am Lagerdeckel oder am Versteifungselement angeordnet sein. Eine einfache Möglichkeit, das Abstützelement beim Einbau zu justieren, besteht darin, das Abstützelement mit einem Gewinde auszubilden. Somit kann bei der Montage des Versteifungselementes das Abstützelement mit einem einfachen Werkzeug justiert werden, um eine praktisch spannungsfreie Montage zu erreichen.

Eine platzsparende und kostengünstige Anordnung ist gemäß Patentanspruch 3 die koaxiale Anordnung des Abstützelementes zu der Schraubverbindung zwischen Versteifungselement und Lagerdeckel.

Im Folgenden ist eine bevorzugte Ausführungsform in einer einzigen Figur näher erläutert.

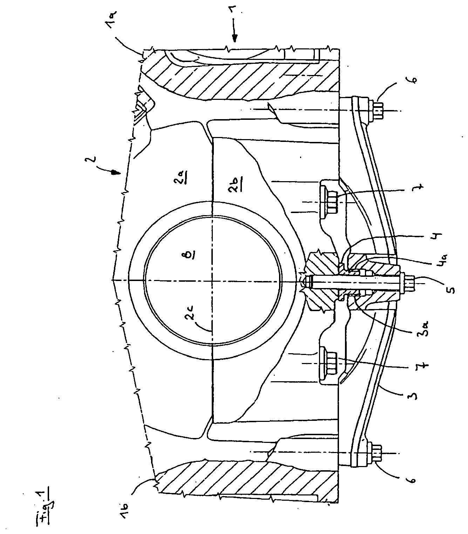

- Fig. 1: zeigt einen Schnitt durch ein Maschinengehäuse.

Fig. 1 zeigt einen Schnitt durch ein Maschinengehäuse 1 mit einem geteilten Lager 2, hier ein Zylinderkurbelgehäuse mit einem Kurbelwellenlager einer Brennkraftmaschine. Das Maschinengehäuse 1 weist eine erste Maschinengehäusewand 1a sowie eine zweite, weitgehend parallel zur ersten Maschinengehäusewand 1a ausgerichtete Maschinengehäusewand 1b auf. Zwischen den Maschinengehäusewänden 1 a, 1 b erstreckt sich ein geteiltes Lager 2 mit einer Lagerbohrung 8, bestehend aus einem Lagerstuhl 2a und einem Lagerdeckel 2b. Lagerstühl und Lagerdeckel sind durch eine Teilungsebene 2c getrennt. Der Lagerstuhl ist einstückig mit den Maschinengehäusewänden 1 a, 1 b ausgeformt. Der Lagerdeckel 2b ist mit zwei Lagerdeckelbefestigungen 7, im vorliegenden Fall mit zwei Schraubverbindungen, an dem Lagerstuhl 2a lösbar befestigt. Ein Versteifungselement 3 überspannt den Lagerdeckel 2b von der ersten Maschinengehäusewand 1a zur zweiten Maschinengehäusewand 1 b, wobei das Versteifungselement 3 im Bereich des Lagerdeckels 2b über ein Abstützelement 4 auf dem Lagerdeckel 2b abgestützt ist. Das Abstützelement 4, sowie das Versteifungselement 3 weisen jeweils eine senkrecht zur Teilungsebene 2c ausgerichtete Bohrung auf, durch die mittels einer Schraubverbindung 5 das Versteifungselement 3 auf dem Lagerdeckel 2b befestigt ist. Das Abstützelement 4 ist koaxial zu der Schraubverbindung 5 angeordnet und weist ein Außengewinde 4a auf, welches in ein korrespondierendes Gewinde 3a im Versteifungselement 3 eingeschraubt ist. Maschinengehäuseseitig ist das Versteifungselement 3 jeweils mit einer Gehäusebefestigung 6, vorzugsweise einer Schraubverbindung, verbunden. Ferner liegt das Versteifungselement 3, benachbart zu den Maschinengehäuseseiten 1a, 1 b, auch auf dem Lagerdeckel 2b auf, bzw. ist mit alternativ diesem verschraubt.

Nach der Fertigung eines Maschinengehäuses 1, können die Auflageflächen der Gehäusewände 1a, 1b und gegebenenfalls auch des Lagerdeckels 2b aufgrund fertigungstechnischer Toleranzen minimal unterschiedliche Auflagehöhen für das Versteifungselement 3 aufweisen. Daher kann sich das Versteifungselement 3 bei einer gleichzeitigen Montage an den Maschinengehäusewänden 1a, 1b und dem Lagerdeckel 2b verspannen und die Verspannungskräfte können, ohne die erfindungsgemäße Ausgestaltung, in das geteilte Lager 2 übertragen werden. Um dies zu vermeiden, weist das Versteifungselement 3 erfindungsgemäß ein lageveränderbares, vorzugsweise ein ein- und ausschraubbares Abstützelement 4 auf.

Nach einer Montage des Versteifungselementes 3 auf den Maschinengehäusewänden 1a und 1b wird daher das Abstützelement 4 derart justiert, dass es auf dem Lagerdeckel 2b spielfrei aufliegt. Diese spielfreie Dreipunktlagerung gewährleistet, dass keine Verspannungskräfte aus dem Versteifungselement 3 über die Schraubverbindung 5 in das geteilte Lager 2, bzw. den Lagerdeckel 2b eingeleitet werden, so dass eine Deformation der Lagerbohrung 8 ausgeschlossen ist. Somit erhält der Verbund Maschinengehäuse 1 und geteiltes Lager 2 durch das Versteifungselement 3 mit dem erfindungsgemäßen Abstützelement 4 eine optimale Steifigkeit.

In weiteren Ausführungsbeispielen kann das Abstützelement 4 auch neben der Schraubverbindung 5 angeordnet sein. Darüber hinaus kann das Abstützelement 4 mit seinem Gewinde 4a an Stelle im Versteifungselement 3, im Lagerdeckel 2b angeordnet sein. Das Versteifungselement 3 kann darüber hinaus noch weitere Befestigungsstellen aufweisen sowie sich über mehrere geteilte Lager 2 erstrecken. So kann beispielsweise ein einziges Versteifungselement 3 alle geteilten Lager 2 einer Kurbelwellengasse überdecken.

### Bezugszeichenliste:

- 1.: Maschinengehäuse
- 1a: erste Maschinengehäusewand
- 1b: zweite Maschinengehäusewand
- 2.: geteiltes Lager
- 2a: Lagerstuhl
- 2b: Lagerdeckel
- 2c: Teilungsebene
- 3.: Versteifungselement
- 3a: korrespondierendes Gewinde
- 4.: Abstützelement
- 4a: Gewinde
- 5.: Schraubverbindung
- 6.: Gehäusebefestigung
- 7.: Lagerdeckelbefestigung
- 8.: Lagerbohrung

## Patentansprüche

1. Maschinengehäuse (1), insbesondere ein Zylinderkurbelgehäuse für eine Brennkraftmaschine, mit einem geteilten Lager (2), insbesondere einem Kurbelwellenlager, dessen Lagerstuhl (2a) sich zwischen zwei Maschinengehäusewänden (1a,1b) erstreckt,
wobei die Maschinengehäusewände (1a, 1b) und ein, zu dem Lagerstuhl (2a) korrespondierender Lagerdeckel (2b) mit einem Versteifungselement (3) verbindbar sind und das Versteifungselement (3) ein Abstützelement (4) zur direkten Auflage auf dem Lagerdeckel (2b) aufweist, **dadurch gekennzeichnet,**
**dass** das Abstützelement (4) in Richtung einer Teilungsebene (2c) des geteilten Lagers (2) lageveränderbar ist, wobei
das Abstützelement (4) am Lagerdeckel (2b) oder am Versteifungselement (3) angeordnet ist und wobei
sich das Versteifungselement (3) über mehrere geteilte Lager (2) erstreckt, wobei
das Abstützelement (4) ein Gewinde (4a) und der Lagerdeckel (2b) oder das Versteifungselement (3) ein korrespondierendes Gewinde (3a) aufweist.

2. Maschinengehäuse nach Patentanspruch 1,
**dadurch gekennzeichnet, dass** eine Lageveränderung des Abstützelementes (4) mittels den Gewinden (4a, 3a) erfolgt.

3. Maschinengehäuse nach Patentanspruch 1 oder 2,
wobei das Versteifungselement (3) mittels einer Schraubverbindung (5) mit dem Lagerdeckel (2b) verbindbar ist,
**dadurch gekennzeichnet, dass** das Abstützelement (4) koaxial zur Schraubverbindung (5) angeordnet ist.

## Claims

1. Engine casing (1), in particular a cylinder crankcase for an internal combustion engine, having a split bearing (2), in particular a crankshaft bearing, the bearing seat (2a) of which extends between two engine casing walls (1a, 1b), wherein the engine casing walls (1a, 1b) and a bearing cover (2b) which corresponds to the bearing seat (2a) are connectable to a stiffening element (3) and the stiffening element (3) has a support element (4) for bearing directly on the bearing cover (2b), **characterized in that** the support element (4) is variable in terms of position in the direction of a split plane (2c) of the split bearing (2), wherein the support element (4) is arranged on the bearing cover (2b) or on the stiffening element (3) and wherein the stiffening element (3) extends across multiple split bearings (2), wherein the support element (4) has a thread (4a) and the bearing cover (2b) or the stiffening element (3) has a corresponding thread (3a).

2. Engine casing according to Patent Claim 1, **characterized in that** a variation in terms of position of the support element (4) is performed by means of the threads (4a, 3a).

3. Engine casing according to Patent Claim 1 or 2, wherein the stiffening element (3) is connectable to the bearing cover (2b) by means of a screw connection (5), **characterized in that** the support element (4) is arranged coaxially with respect to the screw connection (5).

## Revendications

1. Carter de machine (1), en particulier un bloc-moteur pour un moteur à combustion interne, comprenant un palier divisé (2), en particulier un palier de vilebrequin, dont le support de palier (2a) s'étend entre deux parois de carter de machine (1a, 1b),
les parois de carter de machine (1a, 1b) et un couvercle de palier (2b) correspondant au support de palier (2a) pouvant être reliés à un élément raidisseur (3), et l'élément raidisseur (3) présentant un élément de soutien (4) destiné à reposer directement sur le couvercle de palier (2b),
**caractérisé en ce que** l'élément de soutien (4) est variable en position dans la direction d'un plan de division (2c) du palier divisé (2), l'élément de soutien (4) étant disposé sur le couvercle de palier (2b) ou sur l'élément raidisseur (3), et l'élément raidisseur (3) s'étendant sur plusieurs paliers divisés (2), l'élément de soutien (4) présentant un filetage (4a) et le couvercle de palier (2b) ou l'élément raidisseur (3) présentant un filetage (3a) correspondant.

2. Carter de machine selon la revendication 1, **caractérisé en ce qu'**une variation de position de l'élément de soutien (4) est effectuée au moyen des filetages (4a, 3a).

3. Carter de machine selon la revendication 1 ou 2, dans lequel l'élément raidisseur (3) peut être relié au couvercle de palier (2b) au moyen d'un assemblage vissé (5), **caractérisé en ce que** l'élément de soutien (4) est disposé coaxialement à l'assemblage vissé (5).
